Europäisches Patentamt

European Patent Office

Office européen des brevets

(19)

(11) Publication number: **0 067 632**
**B1**

(12) **EUROPEAN PATENT SPECIFICATION**

(45) Date of publication of patent specification: **30.01.85**

(51) Int. Cl.⁴: **B 41 N 1/08, B 32 B 15/01**

(21) Application number: **82302902.0**

(22) Date of filing: **04.06.82**

(54) **Composite aluminum alloy support for lithographic printing plate.**

(30) Priority: **05.06.81 JP 86461/81**

(43) Date of publication of application:
**22.12.82 Bulletin 82/51**

(45) Publication of the grant of the patent:
**30.01.85 Bulletin 85/05**

(84) Designated Contracting States:
**DE FR GB**

(56) References cited:
**DE-A-2 832 580**
**FR-A-2 018 993**
**GB-A- 948 508**

(73) Proprietor: **FUJI PHOTO FILM CO., LTD.**
**210 Nakanuma Minami Ashigara-shi**
**Kanagawa 250-01 (JP)**

(73) Proprietor: **SUMITOMO LIGHT METAL**
**INDUSTRIES LIMITED**
**4-4 Marunouchi 1-chome Chiyoda-Ku**
**Tokyo (JP)**

(72) Inventor: **Ohashi, Azusa**
**No. 4000, Kawahiri Yoshida-cho**
**Haibara-gun Shizuoka (JP)**
Inventor: **Shirai, Akira**
**No. 4000, Kawahiri Yoshida-cho**
**Haibara-gun Shizuoka (JP)**
Inventor: **Takizawa, Kazushige**
**No. 4000, Kawahiri Yoshida-cho**
**Haibara-gun Shizuoka (JP)**
Inventor: **Terai, Shiro**
**No. 1-12, Chitose 3-chome**
**Minato-ku Nagoya-shi Aichi (JP)**
Inventor: **Tsuchida, Shin**
**No. 1-12, Chitose 3-chome**
**Minato-ku Nagoya-shi Aichi (JP)**
Inventor: **Hayashi, Yoshikatsi**
**No. 1-12, Chitose 3-chome**
**Minato-ku Nagoya-shi Aichi (JP)**

Courier Press, Leamington Spa, England.

EP 0 067 632 B1

**0 067 632**

(74) Representative: **Dixon, Donald Cossar et al
Gee & Co. Chancery House Chancery Lane
London WC2A 1QU (GB)**

**Description**

The present invention relates to a support for a printing plate comprised of aluminum alloys having an excellent mechanical strength, printability and which can be produced at low cost.

Lithographic printing plates which are now prevailingly employed are obtained by submitting so-called presensitized printing plates (herainafter referred to as "PS plates"). The PS plates are prepared by coating light-sensitive materials on aluminum plates having surfaces which have been subjected to surface treatments such as a graining treatment, an oxidizing treatment and so on. After these treatment, they are dried and subjected to a plate-making processing. The processing includes an image exposing step, a developing step, a water washing step, a step of treating with lacquer and so on. It is well-known that non-image areas are formed from portions where a light-sensitive layer remains undissolved after completing a developing step as described above. They are also formed from portions where the light-sensitive layer is not exposed in order to make the underlaying aluminum surface water-acceptable.

Aluminum plates are generally used as the supports of such lithographic printing plates. Conventional materials used for this purpose are prepared from aluminum alloy plates produced by casting aluminum alloys, such as JIS A3003, JIS A1100, JIS A1050, etc., into ingots using the usual continuous casting process. The ingots are submitted to a hot rolling process, a cold rolling process and optionally, a heat treatment at an intermediate stage during the rolling processes. The thus produced aluminum alloy plates are also subjected to a surface roughening treatment using a mechanical, a chemical or an electrochemical technique and, subsequently, to an anodic oxidization.

More specifically, there have been known aluminum plates subjected to a mechanical roughening treatment, a chemical etching treatment as well as an anodic oxidization process. Such plates are described in U.S. Patent 3,834,998. Aluminum plates subjected to a chemical etching treatment and subsequently, to anodic oxidization processing are described in Japanese Patent Application (OPI) No. 61304/76. Aluminum plates subjected to an electrochemical treatment and to anodic oxidization processing are described in Japanese Patent Application (OPI) No. 146234/79. Aluminum plates subjected to an electrochemical treatment, a chemical etching treatment and anodic oxidization processing are described in Japanese Patent Publication No. 28123/73. Aluminum plates subjected to a mechanical roughening treatment and subsequently, to the other treatments are described in Japanese Patent Publication No. 28123/73.

However, these conventional aluminum alloy plates sometimes generate dot-form defects upon both the chemical etching and the electrochemical etching treatments. This causes stains in prints obtained. Accordingly, they have turned out to be undesirable with respect to print quality.

Recently, printing speed has increased with the progress of printing techniques in general. This causes an increase in the stress applied to the printing plate fixed mechanically to both ends of a rotating cylinder installed in a printing machine. Therefore, when aluminum alloy plates have insufficient mechanical strengths, this frequently causes deformations or breaks in the printing plate at the above-described fixed parts. This results in problems such as a shear in printing or a breakdown of the printing plate which makes it impossible to continue printing.

In addition, rather thick aluminum alloy plates must be employed to ensure sufficient mechanical strength, e.g., dimensional stability or so on. This is the main cause for the increase in manufacturing costs of lithographic printing plates.

Therefore, a primary object of the present invention is to provide an aluminum alloy support for a printing plate which furnishes a simultaneous solution of the abovedescribed three problems, that is, the problem of printability, the problem of insufficiency of mechanical strength and the economic problem. Therefore, the primary object of the invention is to provide an aluminum alloy support for a printing plate which is inexpensive and has both printability and mechanical strength high enough to be suitable for high speed printing.

The inventors have found that dot-form stains tend to be observed in printed matter when the aluminum alloy plates are prepared using conventional aluminum alloys, JIS A1100 (the purity of aluminum: 99.0%), JIS A1200 (the purity of aluminum: 99.0%) and JIS A3003 (the purity of aluminum: 98.0—98.5%) and subjecting them to a chemical or an electrochemical etching treatment and are then used as supports for printing plates. By carefully analyzing this phenomenon the inventors have confirmed that the dot-form stains are caused by dot-form defects present at the surface of the support. The dot-form defects result from coarse grains of certain intermetallic compounds distributed in the aluminum alloy plates before these plates receive the surface treatments.

More specifically, the $Al_6Mn$ compound of the Al-Fe-Si compound are necessarily crystallized into grains several tens of microns in size out of the aluminum alloy JIS A3003 and the pure aluminum series alloys like A1100 or A1200, respectively, upon solidification in the casting process. The thus formed grains are crushed to some degree in subsequently carried out hot rolling and cold rolling processes. However grains which remain about 5 to 10 microns in size are still distributed even in the final rolled plates. These grains are dissolved and dropped away in the form of a lump during roughening due to the surface treatments and holes measuring 10 microns or larger in size are left. During actual printing, ink is captured in these holes which creates stains on the prints.

3

# 0 067 632

In view of their limited workability which is determined by the thickness of the ingot and the thickness of the final plate, as well as the fact that these compounds are quite stable to heat and decomposed by heat with difficulty, it is almost impossible to finely divide or eliminate grains of the intermetallic compounds by only rolling processes and heat treatment given at an intermediate stage during the rolling processes.

The inventors carried out examinations of various aluminum alloy plates which contain intermetallic compounds to be crystallized out in very reduced amounts. the characteristics of the plates as supports for lithographic printing plates were studied with the intention of excluding the harmful effects of the intermetallic compounds as described above. As a result of these studies it has now been found that a remarkable decrease in the above-described stain can be attained by using a cold rolled plate of high purity aluminum containing 99.5% or more of aluminum, 0.3% or less of iron and other impurities in their respective proportions of 0.15% or less. However, a printing plate obtained by the single use of a rolled plate made up of such high purity aluminum is not as strong as one prepared from aluminum alloys. Consequently, cracks are frequently generated in the vicinity of mechanically fixed parts during printing. This can cause the plate to break making the continuance of printing impossible.

Accordingly methods for eliminating the lack of mechanical strength have been examined. As a result of such examinations it has now been found that it is possible to produce supports having stress resistance of 15 Kg/mm² or above and that such supports are adequate for industrial purposes. The inventors have produced a high purity aluminum rolled plate having excellent surface processability for a printing plate which is employed as an outer layer material and provided on either side or both sides of an aluminum alloy rolled plate. The aluminum alloy rolled plate is produced specifically as a core material and therefore has excellent mechanical strength. By fusing their surfaces together the three problems regarding printability, mechanical strength and cost can be overcome at the same time.

The composite aluminum alloy plates of the present invention and aluminum alloys employed as core material will be described in detail below.

The strength of the composite plate, $\sigma$, is given by the following equation:

$$\sigma = \sigma_f \cdot f + \sigma_c(1\text{-}f)$$

wherein $\sigma_f$ is the strength of an outer layer material, f is a fraction representing the thickness of the outer layer with respect to the total thickness of the composite plate, and $\sigma_c$ is the strength of a core material. Accordingly, the thickness sharing in the composite plate is designed depending upon the strength $\sigma$ necessitated by the printing plate, the strength $\sigma_c$ of the aluminum material to be used as its core material, and the strength $\sigma_f$ of an aluminum material to be used as its outer layer. By considering these factors the thickness of the outer layer material fitted to receive roughening treatments is determined. However, since the composite plate is etched in its thickness direction, it is necessary for the outer layer to have a thickness of at least 10 microns or more, preferably 10 to 100 microns.

The thickness of the core material ranges from 80 to 500 microns, preferably 80 to 300 microns. Aluminum alloys which can be used as the core material include various ones capable of exhibiting stress resistance of 15 Kg/mm² or more when it received a cold rolling process at a rolling rate of 40% or more. Specific examples of such materials include JIS A1100 (which has a stress resistance of 15.0 to 16.5 Kg/mm²), JIS A1200 (which has a stress resistance of 15.0 to 16.5 Kg/mm²), JIS A3003 (which has a stress resistance of 15.0 to 22.0 Kg/mm²), JIS A3004 (which has a stress resistance of 20.0 to 27.0 Kg/mm²) JIS A5052 (which has a stress resistance of 22.0 to 29.0 Kg/mm²), and so on.

The use of these aluminum alloys inevitably increases manufacturing cost. The increased costs are brought about because these aluminum alloys generally have chemical constituents which must be closely controlled during the manufacturing process. The present invention is characterized by the use of such aluminum alloys which have purities of 99 to 95% but which do not receive particular controls with respect to their chemical constituents. Specifically, it is possible to use not only secondary aluminum ingots belonging to the second class (those having aluminum purities of 98% or higher) and the third class (those having aluminum purities of 97% or higher) enacted in JIS H2103, but also aluminum alloys containing impurities in relatively high contents which are obtained by regenerating scrap aluminum once used for printing and other purposes. Therefore, materials of the present invention are superior to conventional material from an economical point of view.

Core materials having stress resistance not higher than 15 Kg/mm² do not increase the strengths of the resulting composite plates because their stress resistances are below those of the outer layer materials. Furthermore, they tend to cause kinks during handling of the plate in the plate-making process. Therefore, these materials make working difficult. In addition, these materials do not have mechanical strengths high enough to be supported by both ends of a rotating cylinder installed in a high speed off-set rotary press. Therefore, a cut in the printing is caused by deformation at the fixed parts, or printing becomes impossible due to a breakdown of the plate. Consequently, these materials are ineligible as the core material of the present invention.

The stress resistance of 15 Kg/mm² corresponds to that which can be acquired by the aluminum alloy having a purity of 99.0% when it received a cold rolling process at a rolling rate of 75%. Obtaining stress resistances not lower than 15 Kg/mm² can be easily acquired by heightening rolling rates or

4

using aluminum alloys having purities of 99 to 95%. When core materials having stress resistances not lower than 20 Kg/mm$^2$ are used, the resulting composite plates have markedly increased mechanical strengths. Even when the total thickness of the composite plate is reduced it can possess a mechanical strength higher than those of conventional ones. Therefore, the amount of the aluminum alloy used as the core material can be reduced. The reduction of the amount used and the use of a low price ingot are combined to contribute greatly to the reduction of manufacturing costs.

Processes for surface treating the aluminum plates of the present invention which are used as supports of lithographic printing plates are described in detail below.

Suitable examples of the graining process which can be applied to the present invention include an electrochemical graining process. In this process graining is carried out in an electrolytic solution comprising hydrochloric acid or nitric acid by passing an electrical current. Other useful processes include mechanical graining processes such as a wire brush graining process wherein aluminum surfaces are scratched with metal wire, a ball graining process wherein aluminum surfaces are rubbed with abrasive balls and abrasives, a nylon brush graining process wherein aluminum surfaces are rubbed with a nylon brush and abrasives, and so on. These graining processes may be employed independently or in combination.

After the graining-process the aluminum plate is subjected to chemical etching processing using an acid or an alkali. If an acid is used as the etching agent, it takes a very long time to destroy the fine structure. Accordingly, the use of acids as etching agents are disadvantageous when applying the present invention industrially. However, this disadvantage can be remedied by using an alkali as the etching agent.

Examples of the alkali agent which can be advantageously employed in the present invention include sodium hydroxide, sodium carbonate, sodium aluminate, sodium metasilicate, sodium phosphate, potassium hydroxide, lithium hydroxide and the like. Of those agents, sodium aluminate is particularly preferred. A preferred concentration of such an alkali in the etching solution and a preferred temperature for the etching processing range from 1 to 50 wt% and from 20 to 100°C, respectively, so as to dissolve the aluminum in an amount of 5 to 20 g/m$^2$.

After the etching process, the aluminum plate is pickled with an acid in order to remove smut remaining on its surface. Acids which can be used for this purpose include nitric acid, sulfuric acid, phosphoric acid, chromic acid, hydrofluoric acid, borofluoric acid, and the like.

Upon the removal of smut particularly after the electrochemical roughening treatment, a method as described in Japanese Patent Application (OPI) No. 12739/78, wherein the smut is removed by coming into contact with 15 to 65 wt% sulfuric acid at a temperature of 50—90°C, or the method of etching with alkali, which is described in Japanese Patent Publication No. 28123/73, can be advantageously employed.

The thus processed aluminum plates can be used as the supports for lithographic printing plates. Also, they can be further submitted to an anodic oxidization processing, a chemical processing, or the like.

The anodic oxidation processing can be carried out using techniques which have so far been employed in the art. For example, an anodically oxidized film can be formed on the surface of an aluminum support by passing DC or AC current through the aluminum support in an aqueous or a nonaqueous solution containing sulfuric acid, phosphoric acid, chromic acid, oxalic acid, sulfamic acid, benzenesulfonic acid, or a mixture of two or more of these acids.

Processing conditions of anodic oxidation are changed depending on what kind of electrolytic solution is used and, therefore, can not be determined indiscriminately. However, as a general guide, it can be said that an electrolytic solution having a concentration of 1 to 80 wt%, a solution temperature of 5 to 70°C, a current density of 0.5 to 60 ampere/dm$^2$, a voltage applied of 1 to 100 V, and an electrolyzing time of 10 to 100 seconds can produce a desired result.

Particularly effective anodic oxidization processes are the processes used in British Patent 1,412,768, wherein anodic oxidation is carried out in sulfuric acid by passing a high density electric current, and the process described in U.S. Patent 3,511,661, wherein anodic oxidation is carried out using phosphoric acid as an electrolytic bath.

The aluminum plate which has been anodically oxidized may be further treated with an aqueous solution of an alkali metal silicate such as sodium silicate or the like using a conventional technique, e.g., a dipping technique, as described in U.S. Patents 2,714,066 and 3,181,461. Alternatively, a subbing layer made up of hydrophilic cellulose (e.g., carboxymethylcellulose, etc.) containing a water soluble metal salt (e.g., zinc acetate, etc.) may be additionally provided on the anodically oxidized aluminum plate as described in U.S. Patent 3,860,426.

On the support for a lithographic printing plate which is prepared in accordance with an embodiment of the present invention, a light-sensitive layer which is known to have be used for PS plates is provided to produce a presensitized lithographic printing plate. The lithographic printing plate obtained by subjecting this PS plate to a plate-making process has excellent properties.

Suitable examples of the composition of the above-described light-sensitive layer are described below.

(1) Light-sensitive layer comprises of a diazo resin and a binder

Preferred examples of the diazo resin include those described in U.S. Patents 2,063,631 and 2,667,415 (incorporated herein by reference), Japanese Patent Publication Nos. 48001/74, 45322/74 and 45323/74 and British Patent 1,312,925. Preferred examples of the binder include those described in British Patents 1,350,521 and 1,460,978 and U.S. Patents 4,123,276, 3,751,257 and 3,660,097 (incorporated herein by reference).

(2) Light-sensitive layer comprised of an o-quinone-diazide compound

Particularly preferable examples include o-naphthoquinonediazide compounds as described in U.S. Patents 2,766,118, 2767,092, 2,772,972, 2,859,112, 2,907,665, 3,046,110, 3,046,111, 3,046,115, 3,046,118, 3,046,119, 3,046,120, 3,046,121, 3,046,122, 3,046,123, 3,061,430. 3,102,809, 3,106,465, 3,635,709 and 3,647,443 (incorporated herein by reference) and many other publications.

(3) Light-sensitive layer comprised of a composition containing an azide compound and a binder (macromolecular compound)

Specific examples of the composition include compositions comprised of azide compounds and water soluble or alkali soluble macromolecular compounds which are described in British Patents 1,235,281 and 1,495,861, Japanese Patent Application (OPI) Nos. 32331/76 and 36128/76, and so on; and compositions comprised of azido group-containing polymers and macromolecular compounds acting as binders as described in Japanese Patent Application (OPI) Nos. 5102/75, 84302/75, 84303/75 and 12984/78; and so on.

(4) Light-sensitive layers comprised of other light-sensitive resinous compositions

Specific examples include the polyester compounds disclosed in Japanese Patent Application (OPI) No. 96696/77; polyvinylcinnamate series resins described in British Patents 1,112,277, 1,313,390, 1,341,004 and 1,377,747 and so on; and photopolymerizable photopolymer compositions described in U.S. Patents 4,072,528 and 4,072,527.

The amount of the light-sensitive layer provided on the support is controlled to between about 0.1 to about 7 g/m², preferably 0.5 to 4 g/m².

PS plates are subjected to processings including a developing step in a conventional manner after imagewise exposure to form resin images. For instance, a PS plate having the light-sensitive layer (1) comprising a diazo resin and a binder has unexposed portions of the light-sensitive layer removed by development after imagewise exposure to produce a lithographic printing plate. However, a PS plate having a light-sensitive layer (2) has exposed portions of the light-sensitive layer which are removed by development with an alkaline aqueous solution after imagewise exposure to produce a lithographic printing plate.

The present invention will now be described in greater detail by reference to the following examples.

Example 1

Material (1) of the present invention is comprised of chemical constituents as shown in Table 1. A comparative material (1) also has its chemical constituents as shown in Table 1. The alloy B employed as the core material of the invention material (1) was obtained by regenerating scraps of aluminum alloy plates of the kind which have been widely used for making screw caps. The alloys A, B and C were each cast into ingots for rolling by means of a conventional continuous casting technique. The ingot of the alloy A was cut so that its surface segregation layer was removed therefrom and then heated to a temperature of 525°C. Thereafter it was submitted to a hot rolling process in order to produce a plate having a thickness of 17 mm.

The ingot of the alloy B was then cut along its rolled planes till its thickness was reduced to 480 mm, and one of the thus cut planes was provisionally bonded the 17 mm thick plate of the above-described alloy A for the outer layer. This compounded ingot was heated to a temperature of 480°C and subjected to the hot rolling process. Thus, the outer layer material and the core material were fused together at their contact plane.

The plate was hot-rolled so as to have a thickness of 5 mm and was subsequently subjected to a cold rolling process to be turned into the 2 mm thick plate. The plate was then submitted to one hour's intermediate annealing at a temperature of 350°C and thereafter to a final cold rolling process to be turned into a 0.30 mm thick plate. Thus, the material (1) of the present invention was prepared. The comparative material (1) was prepared as follows: A 5 mm thick plate was prepared by cutting a ingot of alloy C for rolling so that its surface segregation layer was removed therefrom and its thickness might become 460 mm. This was done by subjecting it to a hot rolling process at 525°C. The thus obtained 5 mm thick plate was then turned into a 0.30 mm thick plate according to the same processes as in the invention material (1). In both the invention material (1) and the comparative material (1), the final cold rolling rate was 85%.

**0 067 632**

TABLE 1

Constituents (% by weight)

| | Alloy | Fe | Si | Cu | Mn | Mg | Cr | Zn | Ti | Al |
|---|---|---|---|---|---|---|---|---|---|---|
| Invention Material (1) | | | | | | | | | | |
| Outer Layer Material | A | 0.20 | 0.10 | 0.01 | 0.005 | 0.003 | 0.01 | 0.01 | 0.02 | 99.61 |
| Core Material | B | 0.79 | 0.56 | 0.03 | 0.02 | 0.02 | 0.01 | 0.01 | 0.18 | 98.38 |
| Comparative Material (1) | C | 0.38 | 0.14 | 0.02 | 0.007 | 0.002 | 0.01 | 0.01 | 0.02 | 99.41 |

Each of these aluminum alloy rolled plates was then submitted to a graining treatment in a suspension of pumice stone in water using a rotated nylon brush. The plate was then etched with a 20% aqueous solution of sodium hydroxide at 50°C for 60 seconds. As a result, 8 g/m² of aluminum dissolved. After being washed thoroughly with running water, the plate was pickled with a 25% aqueous solution of nitric acid and subsequently washed with water to prepare a base plate. The thus prepared base plate was electrolyzed in an electrolytic bath containing 0.5 to 2.5% nitric acid by passing AC current therethrough with a current density of 20 A/dm² or higher as described in Japanese Patent Application (OPI) No. 146234/79. Next, the surface of the base plate was cleaned by dipping it in a 50°C aqueous solution of 15% sulfuric acid for 3 minutes. The plate was then processed to provide an oxidized film at a thickness of 3 g/dm² in a 30°C electrolytic bath containing 20% sulfuric acid as a major component.

On the thus prepared support, was coated a light-sensitive layer haing the following composition at a dry thickness of 2.5 g/m².

| | |
|---|---|
| Ester compounds of naphthoquinone-1,2-diazido-5-sulfonyl chloride with pyrogallol and acetone resin (described in Example 1 of U.S. Patent 3,635,709) | 0.75 g |
| Cresol novolak resin | 2.00 g |
| Oil Blue #603 (product of Orient Chemical Co., Ltd.) | 0.04 g |
| Ethylene dichloride | 16 g |
| 2-Methoxyethylacetate | 12 g |

The thus obtained presensitized printing plate was imagewise exposed for 60 seconds by means of a metal halide lamp of 3 KW placed at a distance of 1 meter. After exposure it was developed with a sodium silicate aqueous solution having a $SiO_2/Na_2O$ molar ratio of 1.2:1 and $SiO_2$ content of 1.5%. After development it was washed with water and dried and then subjected to a comparative printing test using an offset rotary press SYSTEM-C18 (made by Komori Printing Machine Co., Ltd.).

As a result of the printing test comparative material (1) showed printed stains due to the dot-form defects. The stains were present on the average of 17 per 25 cm². However, the invention material (1) had an outer layer of high purity aluminum with a reduced Fe content. The printing test showed that the dot-form stain was not observed at all. Accordingly, the invention material (1) exhibited excellent printing characteristics.

In addition, the invention material (1) had strength characteristics superior to the comparative material (1) as shown in Table 2. This is because the comparative example had an aluminum alloy containing impurities in considerable amounts for its core material. Accordingly, when fitted to the rotating cylinder of the rotary press and impressed on continuous sheets of paper, the comparative material (1) was cracked at its fixed parts when 180,000 sheets of printed paper had been passed. On the other hand, the invention material (1) was not cracked even when 250,000 sheets of prints were obtained.

7

TABLE 2

| | Stress Resistance | Tensional Strength | Elongation | Dot-form Stain Occurrence | Number of Printed Sheets at the Time of Plate Cracking |
|---|---|---|---|---|---|
| | $(Kg/mm^2)$ | $(Kg\text{-}mm^2)$ | (%) | $(Number/25\ cm^2)$ | |
| Invention Material (1) | 17.8 | 19.9 | 3 | zero | 250,000 or more |
| Comparative Material (1) | 14.7 | 16.4 | 2 | 17 | 180,000 |

## Example 2

Ingots for rolling having their respective chemical constituents as shown in Table 3 were prepared. The ingot of alloy D was used as the outer layer material of an invention material (2) and the ingot of the alloy F was used as the outer layer material of an invention material (3). The ingots were cut so that their individual surface segregation layers was removed therefrom. They were then heated to a temperature of 580°C and maintained at their temperature for 8 hours in order to homogenize the temperature throughout the ingots. After waiting for the temperature drop to 530°C, they were each subjected to a hot rolling process and rolled into plates having a thickness of 35 mm.

Ingots of alloys E and G which were used as core materials were cut at their individual surfaces till their thicknesses were reduced to 400 mm. One side of the thus cut plate of the alloy E and one side of the thus cut plate of the alloy G were provisionally united with a 35 mm thick plate of the above-described alloy D and that of the above-described alloy F, respectively.

These compounded ingots were heated to a temperature of 500°C and subjected to a hot rolling process in order to fuse them together at their individual contact planes. Thus, the plates having a thickness of 5 mm were obtained. Subsequently, these plates were subjected to a cold rolling process in order to produce plates 1.5 mm thick. The plates were then submitted to one hour's intermediate annealing at a temperature of 350°C and, thereafter, to a final cold rolling process in order to produce plates 0.30 mm thick.

With respect to both invention materials (2) and (3), the final cold rolling rate was 80%, the thickness of the outer layer material in the composite plate was 24 microns, and the thickness of the core material was 276 microns.

Comparative materials (2) and (3) were prepared as follows: The 500 mm thick ingots for rolling which were made up of the alloys H and I, respectively, were submitted to the homogenization processing at 580°C for 8 hours. Thereafter, they were cut so as to remove their individual surface segregation layers. These ingots were heated again to 500°C and then subjected to a hot rolling process to be rolled into the 5 mm thick plates. Further, these plates were thinned to 2 mm by cold rolling. The plates were then submitted to one hour's intermediate annealing at a temperature of 350°C and thereafter to a final cold rolling process in order to produce the 0.30 mm thick plates. In both the comparative materials (2) and (3), the final cold rolling rate was 85%.

## TABLE 3

| | Alloy | Constituents (% by weight) | | | | | | | | | Remark |
| | | Fe | Si | Cu | Mn | Mg | Cr | Zn | Ti | Al | |
|---|---|---|---|---|---|---|---|---|---|---|---|
| Invention Material (2) | | | | | | | | | | | |
|   Outer Layer Material | D | 0.15 | 0.07 | 0.01 | 0.005 | 0.002 | 0.01 | 0.01 | 0.01 | 99.73 | |
|   Core Material | E | 0.60 | 0.28 | 0.15 | 1.15 | 0.01 | 0.007 | 0.01 | 0.01 | 97.78 | JIS A3003 |
| Invention Material (3) | | | | | | | | | | | |
|   Outer Layer Material | F | 0.29 | 0.11 | 0.01 | 0.004 | 0.003 | 0.005 | 0.01 | 0.02 | 99.55 | |
|   Core Material | G | 0.31 | 0.09 | 0.02 | 0.03 | 2.43 | 0.22 | 0.01 | 0.01 | 96.88 | JIS A5052 |
| Comparative Material (2) | H | 0.55 | 0.16 | 0.11 | 0.01 | 0.01 | 0.007 | 0.01 | 0.01 | 99.13 | JIS A1100 |
| Comparative Material (3) | I | 0.59 | 0.26 | 0.13 | 1.17 | 0.01 | 0.006 | 0.01 | 0.01 | 97.18 | JIS A3003 |

These aluminum alloy rolled plates together with the invention material (1) and the comparative material (1) obtained in Example 1 were submitted to graining treatment in the same manner as in Example 1. This treatment involved the use of rotated nylon brushes in a suspension of pumice stone and water. Thereafter, these plates were etched with a 20% aqueous solution of sodium hydroxide at 50°C for 10 seconds. As a result, 3 g/m² of aluminum dissolved. After etching, the plates were washed thoroughly with running water, pickled with a 25% nitric acid aqueous solution, and washed with water to prepare base plates. The thus prepared base plates were processed in order to provide oxidized films at their individual surfaces at the same thickness of 3 g/m² in a 30°C electrolytic bath containing 20% sulfuric acid as a major component. On each of the thus prepared supports was coated the same light-sensitive layer for the lithographic printing plate used in Example 1 at a dry thickness of 2.5 g/m². The thus obtained printing plates were subjected to the same plate-making processings as in Example 1 and then to the comparative printing test using the offset rotary press SYSTEM C-18.

As a result of such printing tests, a number of dot-form stains occurred in comparative materials (1), (2) and (3). However, the occurrence of dot-form stain was hardly observed in any of the materials of the present invention. The materials of the present invention all exhibited excellent printing characteristics.

In addition, the comparative materials (1) and (2) were cracked at their individual fixed parts when 170,000 and 210,000 sheets of paper respectively had been printed. However, the materials of the present invention were not cracked even when 250,000 sheets of prints were obtained. The strength characteristics and the results of the printing test of both the invention materials and the comparative materials are shown in Table 4.

TABLE 4

| | Stress Resistance | Tensional Strength | Elongation | Dot-form Stain Occurence | Number of Printed Sheets at the Time of Plate Cracking |
|---|---|---|---|---|---|
| | $(Kg/mm^2)$ | $(Kg/mm^2)$ | (%) | (Number/25 $cm^2$) | |
| Invention Material (1) | 17.8 | 19.9 | 3 | 1 | 250,000 or more |
| Invention Material (2) | 18.4 | 20.3 | 3 | zero | 250,000 or more |
| Invention Material (3) | 28.7 | 30.5 | 3 | 2 | 250,000 or more |
| Comparative Material (1) | 14.7 | 16.4 | 2 | 25 | 170,000 |
| Comparative Material (2) | 15.6 | 17.2 | 2 | 45 | 210,000 |
| Comparative Material (3) | 20.5 | 22.8 | 2 | 50 or more | 250,000 or more |

**0 067 632**

While the invention has been described in detail and with reference to specific embodiment thereof, it will be apparent to one skilled in the art that various changes and modifications can be made therein without departing from the scope thereof as defined by the appendent claims.

## Claims

1. A composite aluminum alloy support for a lithographic printing plate, comprising:
a sheet of core material comprised of aluminum alloy and having a stress resistance of 15 kg/mm² or more; and
an outer layer of sheet material fused to at least one surface of the core material, the outer layer having a thickness of 10 microns or more and being comprised of 99.5% or more Al, 0.3% or less Fe and other impurities in respective portions of 0.15% or less.

2. A composite aluminum alloy support for a lithographic printing plate as claimed in Claim 1, wherein the outer layer surface of said support is roughened and then, anodically oxidized.

3. A composite aluminum alloy support for a lithographic printing plate as claimed in Claim 1, said outer layer having a thickness of from 10 to 100 microns.

4. A composite aluminum alloy support for a lithographic printing plate as claimed in any of Claims 1, 2 or 3, wherein the core material as a thickness of 80 to 500 microns.

5. A composite aluminum alloy support for a lithographic printing plate as claimed in Claim 4, wherein the core material has a thickness of from 80 to 300 microns.

6. A lithographic printing plate having a composite aluminum alloy support as claimed in any preceding Claim.

## Revendications

1. Support composite en alliage d'aluminium pour plaque de tirage lithographique, comprenant:
—une feuille d'un matériau central constituée d'un alliage d'aluminium, et ayant une résistance à la tension d'au moins 15 kg/mm²; et
—une couche externe d'un matériau en une feuille assemblée avec au moins une des faces du matériau central, la couche externe ayant une épaisseur d'au moins 10 microns, et étant constituée d'au moins 99,5% d'Al, d'au plus 0,3% de Fe, et d'autres impuretés à raison d'au plus 0,15% chacune.

2. Support composite en alliage d'aluminium pour plaque de tirage lithographique selon la revendication 1, caractérisé en ce que la surface de la couche externe dudit support est rendue rugueuse et, ensuite, est oxydée anodiquement.

3. Support composite en alliage d'aluminium pour plaque de tirage lithographique selon la revendication 1, caractérisé en ce que ladite couche externe a une épaisseur de 10 à 100 microns.

4. Support composite en alliage d'aluminium pour plaque de tirage lithographique selon l'une quelconque des revendications 1, 2 ou 3, caractérisé en ce que le matériau central a une épaisseur de 80 à 500 microns.

5. Support composite en alliage d'aluminium pour plaque de tirage lithographique selon la revendication 4, caractérisé en ce que le matériau central a une épaisseur de 80 à 300 microns.

6. Plaque de tirage lithographique comprenant un support composite en alliage d'aluminium selon l'une quelconque des revendications précédentes.

## Patentansprüche

1. Zusammengesetzter Träger für eine lithographische Druckplatte aus einer Aluminiumlegierung, umfassend:
—ein Blech aus einem Kernmaterial, enthaltend eine Aluminiumlegierung mit einer Spannungs- bzw. Dehnungsbeständigkeit von 15 kg/mm² oder mehr; und
—eine äußere Schicht aus einem Blechmaterial, die mit mindestens einer Oberfläche des Kernmaterials verbunden ist, wobei die äußere Schicht eine Dicke von 10 $\mu$m oder mehr besitzt und 99,5% oder mehr Al, 0,3% oder weniger Fe und andere Verunreinigungen in entsprechenden Anteilen von 0,15% oder weniger enthält.

2. Zusammengesetzter Träger für eine lithographische Druckplatte aus einer Aluminiumlegierung nach Anspruch 1, dadurch gekennzeichnet, daß die Oberfläche der äußeren Schicht des Trägers aufgerauht und danach anodisch oxidiert worden ist.

3. Zusammengesetzter Träger für eine lithographische Druckplatte aus einer Aluminiumlegierung nach Anspruch 1, dadurch gekennzeichnet, daß die äußere Schicht eine Dicke von 10 bis 100 $\mu$m besitzt.

12

4. Zusammengesetzter Träger für eine lithographische Druckplatte aus einer Aluminiumlegierung nach einem der Ansprüche 1, 2 oder 3, dadurch gekennzeichnet, daß das Kernmaterial eine Dicke von 80 bis 500 $\mu$m besitzt.

5. Zusammengesetzter Träger für eine lithographische Druckplatte aus einer Aluminiumlegierung nach Anspruch 4, dadurch gekennzeichnet, daß das Kernmaterial eine Dicke von 80 bis 300 $\mu$m besitzt.

6. Lithographische Druckplatte mit einem zusammengesetzten Träger aus einer Aluminiumlegierung nach einem der vorangehenden Ansprüche.